# EUROPÄISCHE PATENTSCHRIFT

(11) **EP 3 385 199 B1**
(45) Veröffentlichungstag und Bekanntmachung des Hinweises auf die Patenterteilung: **28.08.2024**
(21) Anmeldenummer: 17165285.2
(22) Anmeldetag: 06.04.2017
(51) Int. Cl.: B65G 47/88, B23Q 16/00

(54) **VERFAHREN UND PALETTENSTOPPER ZUM STOPPEN EINES STÜCKIGEN GUTS**
METHOD AND PALETTE STOPPER FOR STOPPING A LUMPY MATERIAL
PROCÉDÉ ET BUTÉE DE PALETTES DESTINÉS À ARRÊTER UNE MARCHANDISE MONOBLOC

(43) Veröffentlichungstag der Anmeldung: 10.10.2018
(73) Patentinhaber: Weforma Dämpfungstechnik GmbH, 52224 Stolberg (DE)
(72) Erfinder: Heger, Axel, 52224 Stolberg (DE); Schmidt, Armin, 52224 Stolberg (DE)
(74) Vertreter: Bauer, Dirk

(56) Entgegenhaltungen:
- EP-A2- 1 522 383
- CN-U- 205 708 783
- DE-A1- 102013 015 525
- DE-A1- 19 543 797
- DE-A1- 4 236 534
- FR-A1- 2 856 998
- US-A- 5 168 976

## Beschreibung

Die Erfindung betrifft zunächst ein Verfahren zum Stoppen eines stückigen Guts, das mittels einer Stetigfördervorrichtung entlang einer Förderstrecke in einer Förderrichtung zu einer Stoppstelle gefördert wird, wobei an der Stoppstelle zunächst ein Anschlag aus einer Rückstellung außerhalb der Förderstrecke derart in die Förderstrecke bewegt wird, dass das Gut auf den Anschlag aufläuft und diesen in der Förderrichtung um eine Dämpfungslänge verschiebt, wobei ein Impuls des Guts beim Durchströmen eines Fluids durch ein Drosselelement dissipiert wird, und wobei der Anschlag anschließend aus der Förderstrecke entfernt und um die Dämpfungslänge entgegen der Förderrichtung zurück in die Rückstellung bewegt wird. Die Erfindung betrifft weiterhin einen Palettenstopper zum Ausführen eines solchen Verfahrens.

Ein solches Verfahren und ein entsprechender Palettenstopper sind aus DE 10 2007 024 300 A1 bekannt, wobei der Anschlag mittels eines Querantriebs quer zu der Förderrichtung aus der Rückstellung in die Förderstrecke und zurück bewegt wird. Das Gehäuse des bekannten Palettenstopper umschließt den Anschlag in beiden Positionen und weist eine entsprechende Bauhöhe auf.

DE 195 43 797 A1 offenbart ein Verfahren nach dem Oberbegriff des Anspruchs 1 und einen Palettenstopper nach dem Oberbegriff des Anspruchs 5.

### Aufgabe

Der Erfindung liegt die Aufgabe zugrunde, die Bauhöhe des Palettenstoppers zu vermindern.

### Lösung

Die genannte Aufgabe wird durch ein Verfahren zum Stoppen eines stückigen Guts nach Anspruch 1 und durch einen Palettenstopper nach Anspruch 5 gelöst.

Ausgehend von dem bekannten Verfahren wird nach der Erfindung vorgeschlagen, dass der Anschlag aus der Rückstellung in die Förderstrecke und aus der Förderstrecke in die Rückstellung um die Förderrichtung geschwenkt wird. Der erfindungsgemäße Palettenstopper weist im Vergleich zu dem bekannten Palettenstopper eine um die Differenz zwischen den Höhen der Rückstellung und der Stellung in der Förderstrecke verminderte Bauhöhe auf.

Vorzugsweise wird im Rahmen eines erfindungsgemäßen Verfahrens der Anschlag in einer Drehrichtung aus der Rückstellung in die Förderstrecke und entgegengesetzt der Drehrichtung aus der Förderstrecke in die Rückstellung um die Förderrichtung geschwenkt. Das Gehäuse muss so für die Bewegung in der entgegengesetzten Drehrichtung keinen zusätzlichen Raum bereitstellen.

Vorzugsweise wird im Rahmen eines erfindungsgemäßen Verfahrens der Anschlag um einen definierten Schwenkwinkel der Rückstellung in die Förderstrecke geschwenkt. Das Gehäuse muss so keinen zusätzlichen Raum für Bewegungen mit einem größeren Schwenkwinkel bereitstellen.

Vorzugsweise wird im Rahmen eines erfindungsgemäßen Verfahrens der Anschlag nach Entfernung aus der Förderstrecke von dem Gut beim Überfahren der Stoppstelle um die Dämpfungslänge zurück bewegt. Der Palettenstopper benötigt so keinen weiteren Antrieb für die Rückstellung.

Alternativ kann der Anschlag oder das Gehäuse eine Spirale um die Längsachse des Anschlags aufweisen, so dass der Rückstellantrieb zugleich eine Rotationsbewegung des Anschlags bewirkt. In diesem Fall entfällt die Rückstellung über das Gut.

Ausgehend von dem bekannten Palettenstopper wird nach der Erfindung vorgeschlagen, dass der Anschlag mittels des Antriebs um die Förderrichtung schwenkbar ist. Der erfindungsgemäße Palettenstopper ermöglicht die Ausführung des vorstehenden Verfahrens und zeichnet sich gleichermaßen durch die dort aufgeführten Vorteile aus.

Vorzugsweise ist in einem erfindungsgemäßen Palettenstopper der Antrieb ein Motor. Elektrische Motoren stehen in vielen Varianten zu geringen Kosten am Markt zur Verfügung. Alternativ kann der Anschlag auch durch einen Elektromagneten oder einen pneumatischen oder hydraulischen Antrieb verschwenkt werden.

Vorzugsweise weist in einem erfindungsgemäßen Palettenstopper das Dämpfungselement einen Kolben auf, der in einem mit dem Fluid gefüllten Kolben beweglich ist. Derartige pneumatische oder hydraulische Dämpfungskolben sind aus dem Stand der Technik bekannt und bewährt.

Alternativ kann ein elektro-rheologisches Dämpfungselement oder ein Elastomer zum Einsatz kommen.

Vorzugsweise ist in einem erfindungsgemäßen Palettenstopper der Kolben derart mit dem Anschlag mechanisch verbunden, dass er bei Verschiebung des Anschlags in der Förderrichtung entgegen der Förderrichtung bewegt wird. Durch die Umkehr der Bewegungsrichtung - beispielweise über mechanische Hebel - kann das Dämpfungselement neben dem Anschlag (insbesondere unter demselben) angeordnet werden.

Vorzugsweise besteht in einem erfindungsgemäßen Palettenstopper der Anschlag aus Stahl. Weiter vorzugsweise weist in einem erfindungsgemäßen Palettenstopper der Rückstellantrieb einen Rückstellanschlag auf, den das Gut beim Überfahren der Stoppstelle betätigt. Weiter vorzugsweise besteht ein solcher Rückstellanschlag aus Stahl und weist ein solcher Palettenstopper ein Elastomerelement auf, das eine Bewegung des Rückstellanschlag entgegen der Förderrichtung begrenzt. Wird der Palettenstopper durch eine Fehlbedienung von dem Gut entgegen der Förderrichtung angefahren, so kann dieses den Rückstellanschlag zerstörungsfrei überfahren.

Alternativ kann der Anschlag bzw. der Rückstellanschlag entgegen der Förderrichtung gelenkig gelagert und beispielsweise federbelastet sein, um jeweils dasselbe Ziel zu erreichen. In einem solchen erfindungsgemäßen Palettenstopper ist der Anschlag gegen Zerstörung gesichert.

Weiterhin alternativ erfolgt die Rückstellung über eine Kulissenführung, über eine Schräge, linear oder über eine Längsnut. In solchen erfindungsgemäßen Palettenstoppern ist kein Rückstellanschlag erforderlich.

Vorzugsweise weist ein erfindungsgemäßer Palettenstopper mindestens einen induktiven oder kapazitiven Sensor auf, um die Position des Anschlags in der Förderrichtung und/oder den Schwenkposition des Anschlags um die Position des Anschlags zu ermitteln

### Ausführungsbeispiel

Die Erfindung wird nachfolgend anhand von Ausführungsbeispielen erläutert. Es zeigen
- Fig. 1a/b: einen ersten erfindungsgemäßen Palettenstopper in einer Startposition,
- Fig. 2a/b: den ersten Palettenstopper in einer Endposition,
- Fig. 3a: einen Schnitt durch den ersten Palettenstoppers,
- Fig. 3b: ein Detail des Schnitts,
- Fig. 4: den ersten Palettenstopper in einer Zwischenstellung (Freigabe der Palette),
- Fig. 5: den ersten Palettenstopper in Rückstellung (Palette hat den Schieber überfahren und den Anschlag zurückgestellt)
- Fig. 6: ein Detail eines zweiten erfindungsgemäßen Palettenstoppers und
- Fig. 7a/b: einen dritten erfindungsgemäßen Palettenstopper.

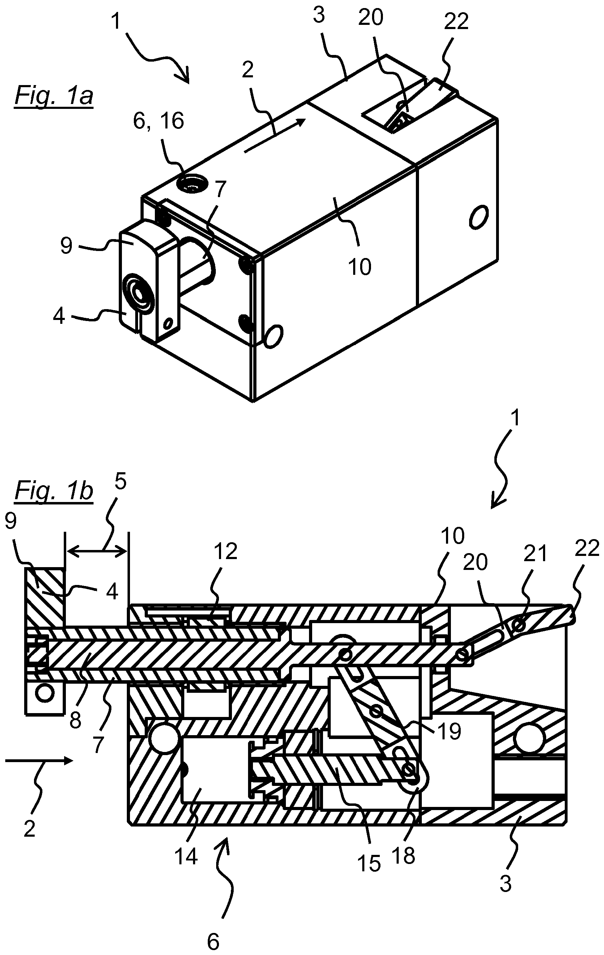

Der in den Figuren 1 bis 5 gezeigte erste erfindungsgemäße Palettenstopper 1 weist ein in Förderrichtung 2 langgestrecktes quaderförmiges Gehäuse 3 mit etwa quadratischem Querschnitt, sowie ein quaderförmiger Anschlag 4 aus Stahl auf, das um eine Dämpfungslänge 5 gegen ein Drosselelement 6 des Palettenstoppers 1 verschiebbar ist.

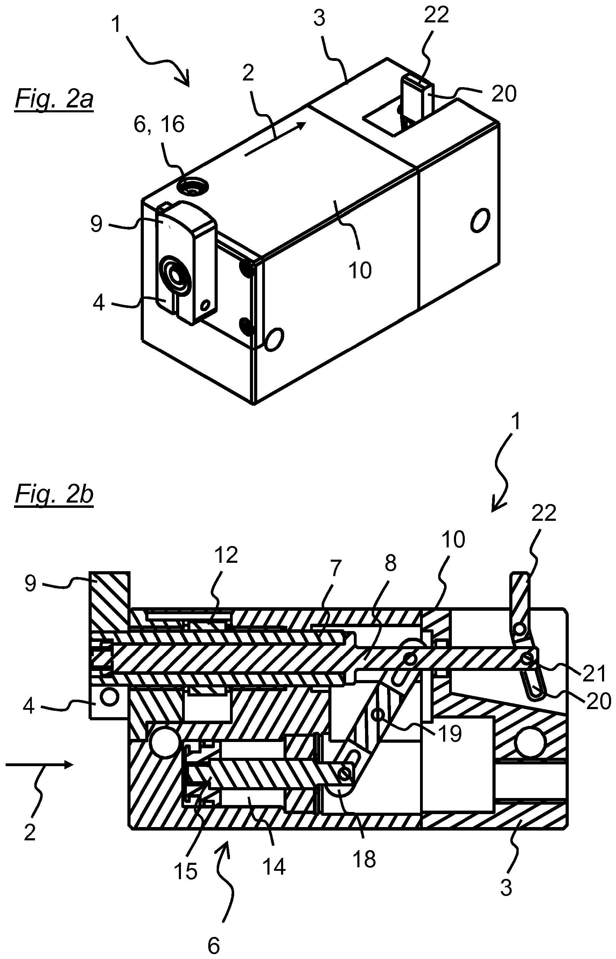

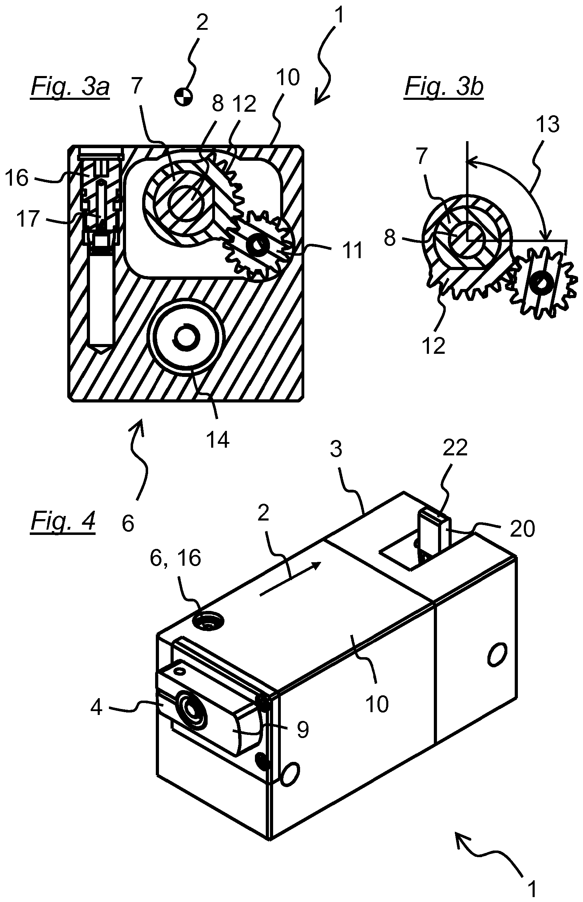

Der Anschlag 4 ist auf einen rohrförmigen Anschlagträger 7 geklemmt, der in der Förderrichtung 2 auf einer zylindrischen Anschlagachse 8 um die Förderrichtung 2 schwenkbar und mit der Anschlagachse 8 in dem Gehäuse 3 in der Förderrichtung 2 um die Dämpfungslänge 5 verschiebbar gelagert ist. In der in den Figuren 1a/b und 3a dargestellten Startposition und der in den Figuren 2a/b und 3a dargestellten Endposition weist Anschlagkopf 9 des Anschlags 4 senkrecht nach oben über eine Oberseite 10 des Gehäuses 3 hinaus.

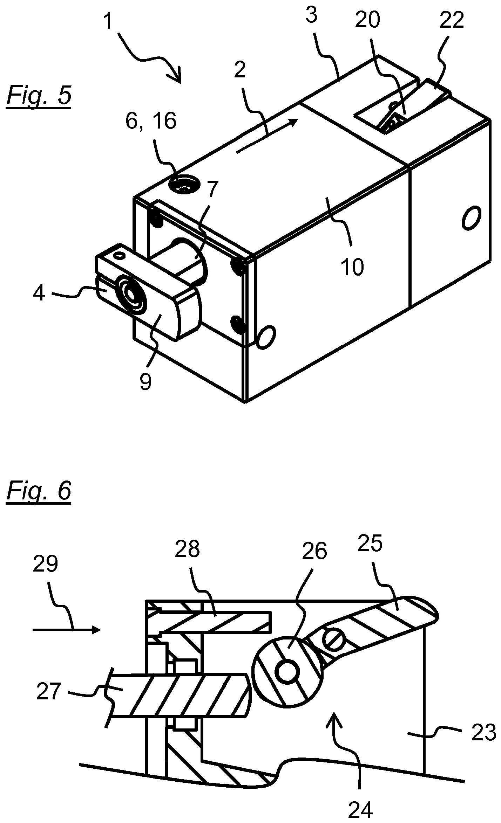

Der Palettenstopper 1 weist als Antrieb 11 zum Schwenken des Anschlags 4 einen nicht weiter dargestellten Motor auf, der in ein Zahnradsegment 12 auf dem Anschlagträger 7 eingreift. Der Anschlagträger 7 und damit der Anschlag 4 ist mittels des Antriebs 11 um einen Schwenkwinkel 13 von 90 ° aus der Endposition in die in den Figuren 3b und 4 dargestellte Zwischenstellung und zurück aus der in den Figuren 3b und 5 dargestellten Rückstellung in die Startposition schwenkbar.

Das Drosselelement 6 weist einen parallel zu der Förderrichtung 2 unter der Achse in dem Gehäuse 3 angeordneten, luftgefüllten Dämpfungszylinder 14, einen in dem Dämpfungszylinder 14 verschiebbar gelagerten Kolben 15 und ein über eine Einstellschraube 16 einstellbares Rückschlagventil 17 in der Oberseite 10 des Gehäuses 3 auf. Der Kolben 15 ist mit einem Hebel 18 verbunden, der in einer quer zu der Förderrichtung 2 verlaufenden Hebelachse 19 in dem Gehäuse 3 gelagert ist. Der Hebel 18 verbindet den Kolben 15 derart mit der Anschlagachse 8, dass sich beide in entgegengesetzter Richtung bewegen.

Beim Einfahren des Anschlagträgers 7 in das Gehäuse 3 wird der Kolben 15 in den Dämpfungszylinder 14 verschoben und komprimiert die darin befindliche Luft, die gegen das Rückschlagventil 17 aus dem Gehäuse 3 entweicht und den Impuls des auf den Anschlag 4 auffahrenden Guts in Wärme dissipiert. Bei entgegengesetzter Bewegung des Kolbens 15 öffnet das Rückschlagventil 17 und der Dämpfungszylinder 14 füllt sich erneut mit Luft.

Der erste Palettenstopper 1 weist einen mit der Anschlagachse 8 gekoppelten Rückstellanschlag 20 aus Stahl auf. Der Rückstellanschlag 20 ist um eine zu der Hebelachse 19 parallele Rückstellachse 21 in dem Gehäuse 3 gelagert. Ein Rückstellkopf 22 des Rückstellanschlags 20 liegt in der Startposition im Gehäuse 3 und richtet sich beim Einfahren des Anschlagträgers 7 in das Gehäuse 3 gegen die Förderrichtung 2 über die Oberseite 10 des Gehäuses 3 auf.

Der in Figur 6 in einem Detail dargestellte zweite erfindungsgemäße Palettenstopper 23 entspricht weitestgehend dem ersten Palettenstopper 1. Abweichend weist der Rückstellanschlag 24 des zweiten Palettenstoppers 23 eine dem Rückstellkopf 25 gegenüber angeordnete Rolle 26 auf, auf die die Anschlagachse 27 aufläuft. Der Palettenstopper 23 weist weiterhin ein Elastomerelement 28 auf, auf das der Rückstellkopf 25 aufläuft und das so eine Bewegung des Rückstellanschlags 24 entgegen der Förderrichtung 29 begrenzt.

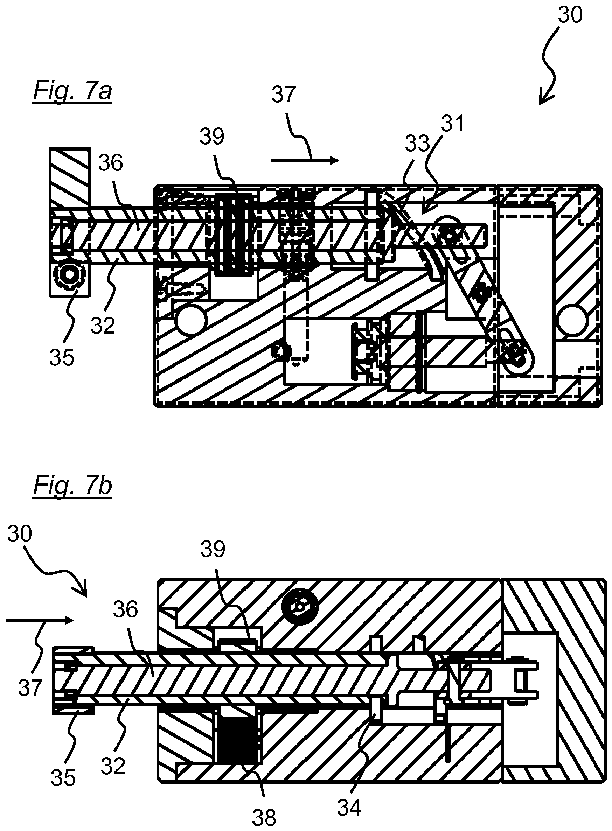

Auch der in den Figuren 7a/b in zwei Schnitten dargestellte dritte erfindungsgemäße Palettenstopper 30 entspricht weitgehend dem ersten Palettenstopper 1. Anstelle eines Rückstellanschlags weist der dritte Palettenstopper 30 eine Kulissenführung 31 auf mit einer den Anschlagträger 32 gewindeförmig umgebenden Führungsnut 33 und einem an dem Anschlagträger 32 angebrachten Führungsbolzen 34, der in der Führungsnut 33 geführt wird.

Die erfindungsgemäßen Palettenstopper 1, 23, 30 sind gleichermaßen geeignet zum Stoppen eines stückigen Guts, beispielsweise einer Palette, das mittels einer Stetigfördereinrichtung, beispielsweise einem Förderband entlang einer Förderstrecke gefördert wird. Das stückige Gut, die Stetigfördereinrichtung und die Förderstrecke sind nicht dargestellt.

Die Palettenstopper 1, 23, 30 werden derart in die Fördereinrichtung eingebaut, dass die Oberseite 10 des Gehäuses 3 bündig in der Förderstrecke liegt und in der in den Figuren 1 a/b, 3a und 6 dargestellten Startposition nur der Anschlag 4 und in der in den Figuren 2a/b dargestellten Endposition der Rückstellanschlag 20, 24 in die Förderstrecke ragen.

Das Gut läuft gegen den Anschlag 4 und verschiebt diesen in der Förderrichtung 2, 29 aus der Startposition in die in den Figuren 2a/b dargestellte Endposition. Durch den Hebel 18 wird die Bewegung des Anschlags 4 auf den Kolben 15 übertragen, der entsprechend in den Zylinder verschoben wird. Hierbei wird der Impuls des Guts beim Durchströmen des Hydrauliköls durch den Kolben 15 in Wärme umgesetzt und dissipiert. Zugleich wird die Bewegung des Anschlags 4 auch auf den Rückstellanschlag 20, 24 übertragen, der sich in die Förderstrecke aufrichtet.

Um das Gut zur Weiterfahrt freizugeben, wird der Anschlag 4 mittels des Motors um den Schwenkwinkel 13 aus der Förderstrecke in die in den Figuren 3b und 4 gezeigte Zwischenstellung in das Gehäuse 3 geschwenkt.

Bei der Weiterfahrt in der Förderrichtung 2, 29 überfährt das Gut den Rückstellanschlag 20, 24 (sowie in dem zweiten erfindungsgemäßen Palettenstopper 23 den Rückstellkopf 25 und die Rolle 26) und verschwenkt diesen aus der Förderstrecke in das Gehäuse 3. Die Bewegung des Rückstellanschlags 20, 24 wird zugleich auf den Anschlag 4 übertragen, das entgegen der Förderrichtung 2, 29 aus dem Gehäuse 3 in die in den Figuren 3b und 5 gezeigte Rückstellung ausfährt.

In dem dritten Palettenstopper 30 ist die Bewegung des Anschlags 35 in der Anschlagachse 36 so immer unmittelbar mit einer Schwenkbewegung des Anschlags 35 um die Anschlagachse 36 gekoppelt: Durch die Kulissenführung 31 wird die Verschiebung des Anschlags 35 aus der Startstellung durch das auflaufende Gut in der Förderrichtung 37 zugleich in eine Schwenkbewegung um die Anschlagachse 36 in die Zwischenstellung, und die durch den Antrieb 38 zur Rückstellung auf das Zahnrad 39 und den Anschlagträger 32 übertragene Schwenkbewegung zugleich in eine rückstellende Längsbewegung gegen die Förderrichtung 37 zurück in die Startposition umgesetzt.

In den Figuren sind
- 1: Palettenstopper
- 2: Förderrichtung
- 3: Gehäuse
- 4: Anschlag
- 5: Dämpfungslänge
- 6: Drosselelement
- 7: Anschlagträger
- 8: Anschlagachse
- 9: Anschlagkopf
- 10: Oberseite
- 11: Antrieb
- 12: Zahnradsegment
- 13: Schwenkwinkel
- 14: Dämpfungszylinder
- 15: Kolben
- 16: Einstellschraube
- 17: Rückschlagventil
- 18: Hebel
- 19: Hebelachse
- 20: Rückstellanschlag
- 21: Rückstellachse
- 22: Rückstellkopf
- 23: Palettenstopper
- 24: Rückstellanschlag
- 25: Rückstellkopf
- 26: Rolle
- 27: Anschlagachse
- 28: Elastomerelement
- 29: Förderrichtung
- 30: Palettenstopper
- 31: Kulissenführung
- 32: Anschlagträger
- 33: Führungsnut
- 34: Führungsbolzen
- 35: Anschlag
- 36: Anschlagachse
- 37: Förderrichtung
- 38: Antrieb
- 39: Zahnrad

## Patentansprüche

1. Verfahren zum Stoppen eines stückigen Guts, das mittels einer Stetigfördervorrichtung entlang einer Förderstrecke in einer Förderrichtung (2, 37) zu einer Stoppstelle gefördert wird, wobei an der Stoppstelle zunächst ein Anschlag (4, 35) aus einer Rückstellung außerhalb der Förderstrecke derart in die Förderstrecke bewegt wird, dass das Gut auf den Anschlag (4, 35) aufläuft und diesen in der Förderrichtung (2, 37) um eine Dämpfungslänge (5) verschiebt, wobei ein Impuls des Guts beim Durchströmen eines Fluids durch ein Drosselelement (6) dissipiert wird, und wobei der Anschlag (4, 35) anschließend aus der Förderstrecke entfernt und um die Dämpfungslänge (5) entgegen der Förderrichtung (2, 37) zurück in die Rückstellung bewegt wird, ***dadurch gekennzeichnet, dass*** der Anschlag (4, 35) aus der Rückstellung in die Förderstrecke und aus der Förderstrecke in die Rückstellung um die Förderrichtung (2, 37) geschwenkt wird.

2. Verfahren nach dem vorgenannten Anspruch, ***dadurch gekennzeichnet, dass*** der Anschlag (4, 35) in einer Drehrichtung aus der Rückstellung in die Förderstrecke und entgegengesetzt der Drehrichtung aus der Förderstrecke in die Rückstellung um die Förderrichtung (2, 37) geschwenkt wird.

3. Verfahren nach dem vorgenannten Anspruch, ***dadurch gekennzeichnet, dass*** der Anschlag (4, 35) um einen Schwenkwinkel (13) aus der Rückstellung in die Förderstrecke geschwenkt wird.

4. Verfahren nach einem der vorgenannten Ansprüche, ***dadurch gekennzeichnet, dass*** der Anschlag (4, 35) nach Entfernung aus der Förderstrecke von dem Gut beim Überfahren der Stoppstelle um die Dämpfungslänge (5) zurück bewegt wird.

5. Palettenstopper (1, 23, 30) zum Stoppen eines stückigen Guts an einer Stoppstelle einer Förderstrecke, entlang der das Gut mittels einer Stetigfördervorrichtung in einer Förderrichtung (2, 37) gefördert wird, mit einem Anschlag (4, 35) und einem Antrieb (11, 38), mittels dessen der Anschlag (4, 35) aus einer Rückstellung außerhalb der Förderstrecke in die Förderstrecke und aus der Förderstrecke entfernbar ist, mit einem Drosselelement (6), wobei ein auf den Anschlag (4, 35) wirkender und den Anschlag (4, 35) in der Förderrichtung (2, 37) um eine Dämpfungslänge (5) verschiebender Impuls des Guts beim Durchströmen eines Fluids durch das Drosselelement (6) dissipiert wird, und mit einem Rückstellantrieb, mittels dessen der Anschlag (4, 35) um die Dämpfungslänge (5) entgegen der Förderrichtung (2, 37) zurück in die Rückstellung bewegbar ist, ***dadurch gekennzeichnet, dass*** der Anschlag (4, 35) mittels des Antriebs (11, 38) um die Förderrichtung (2, 37) schwenkbar ist.

6. Palettenstopper (1, 23, 30) nach dem vorgenannten Anspruch, ***dadurch gekennzeichnet, dass*** der Antrieb (11, 38) ein Motor ist.

7. Palettenstopper (1, 23, 30) nach einem der vorgenannten Ansprüche 5 oder 6, ***dadurch gekennzeichnet, dass*** das Dämpfungselement einen Kolben (15) aufweist, der in einem mit dem Fluid gefüllten Dämpfungszylinder (14) beweglich ist.

8. Palettenstopper (1, 23, 30) nach dem vorgenannten Anspruch, ***dadurch gekennzeichnet, dass*** der Kolben (15) derart mit dem Anschlag (4, 35) mechanisch verbunden ist, dass er bei Verschiebung des Anschlags (4, 35) in der Förderrichtung (2, 37) entgegen der Förderrichtung (2, 37) bewegt wird.

9. Palettenstopper (1, 23, 30) nach einem der vorgenannten Ansprüche 5-8, ***dadurch gekennzeichnet, dass*** der Anschlag (4, 35) aus Stahl besteht.

10. Palettenstopper (1, 23) nach einem der vorgenannten Ansprüche 5-9, ***dadurch gekennzeichnet, dass*** der Rückstellantrieb einen Rückstellanschlag (20, 24) aufweist, den das Gut beim Überfahren der Stoppstelle betätigt.

## Claims

1. A method for stopping a lumpy product that is fed by a continuous conveyor along a feed path in a feed direction (2, 37) to a stop location, wherein a stop (4, 35) at the stop location is initially moved from a reset position outside of the feed path into the feed path such that the product abuts against the stop (4, 35) and moves the stop in the feed direction (2, 37) by a damping length (5), wherein an impulse of the product is dissipated when a fluid flows through a throttle element (6), and wherein the stop (4, 35) is subsequently removed from the feed path and moved back into the reset position by the damping length (5) counter to the feed direction (2, 37), ***characterized in that*** the stop (4, 35) is pivoted from the reset position into the feed path and pivoted from the feed path into the reset position about the feed direction (2, 37).

2. The method according to the preceding claim, ***characterized in that*** the stop (4, 35) is pivoted in one direction of rotation from the reset position into the feed path and in an opposite direction of rotation from the feed path into the reset position about the feed direction (2, 37).

3. The method according to the preceding claim, ***characterized in that*** the stop (4, 35) is pivoted by a pivot angle (13) from the reset position into the feed path.

4. The method according to any one of the preceding claims, ***characterized in that*** the stop (4, 35), after being removed from the feed path, is moved back by the damping length (5) by the product traveling over the stop location.

5. A pallet stopper (1, 23, 30) for stopping a lumpy product at a stop location of a feed path along which the product is fed by a continuous conveyor in a feed direction (2, 37), with a stop (4, 35) and a drive (11, 38) by which the stop (4, 35) can be removed from a reset position outside of the feed path into the feed path and from the feed path, with a throttle element (6), wherein an impulse of the product that acts on the stop (4, 35) and displaces the stop (4, 35) in the feed direction (2, 37) by a damping length (5) is dissipated when a fluid flows through the throttle element (6), and with a reset drive by means of which the stop (4, 35) can be moved by the damping length (5) counter to the feed direction (2, 37) back into the reset position, ***characterized in that*** the stop (4, 35) is pivotable about the feed direction (2, 37) by means of the drive (11, 38).

6. The pallet stopper (1, 23, 30) according to the preceding claim, **characterized in that** the drive (11, 38) is a motor.

7. The pallet stopper (1, 23, 30) according to any one of the preceding claims 5 or 6, ***characterized in that*** the damping element includes a piston (15) that is movable in a damping cylinder (14) that is filled with the fluid.

8. The pallet stopper (1, 23, 30) according to the preceding claim, ***characterized in that*** the piston (15) is mechanically connected with the stop (4, 35) such that the piston is moved counter to the feed direction (2, 37) when the stop (4, 35) is moved in the feed direction (2, 37).

9. The pallet stopper (1, 23, 30) according to any one of claim 5 to 8, ***characterized in that*** the stop (4, 35) is made from steel.

10. The pallet stopper (1, 23) according to any one of the preceding claims 5 to 9, ***characterized in that*** the reset drive includes a reset stop (20, 24) that is actuated by the product traveling over the stop location.

## Revendications

1. Procédé pour arrêter un produit en morceaux, qui est transporté jusqu'à un point d'arrêt le long d'un itinéraire de transport dans une direction de transport (2, 37) au moyen d'un dispositif de transport continu, sachant qu'au point d'arrêt, une butée (4, 35) est d'abord déplacée dans l'itinéraire de transport d'une position de réarmement en dehors de l'itinéraire de transport de telle manière que le produit échoue sur a butée (4, 35) et déplace celle-ci d'une longueur d'amortissement (5) dans la direction de transport (2, 37), sachant qu'une impulsion du produit est dissipée lors de l'écoulement d'un fluide à travers un élément d'étranglement (6) et sachant que la butée (4, 35) est éloignée ensuite de l'itinéraire de transport et est déplacée de la longueur d'amortissement (5) à l'opposé de la direction de transport (2, 37) en arrière dans la position de réarmement , **caractérisé en ce que** la butée (4, 35) est pivotée de la direction de transport (2, 37) de la position de réarmement dans l'itinéraire de transport et de l'itinéraire de transport dans la position de réarmement .

2. Procédé selon la revendication précédente, **caractérisé en ce que** la butée (4, 35) est pivotée de la direction de transport (2, 37) dans une direction de rotation de la position de réarmement dans l'itinéraire de transport et à l'opposé de la direction de rotation de l'itinéraire de transport dans la position de réarmement .

3. Procédé selon la revendication précédente, **caractérisé en ce que** la butée (4, 35) est pivotée d'un angle de pivotement (13) de la position de réarmement dans l'itinéraire de transport.

4. Procédé selon l'une quelconque des revendications précédentes, **caractérisé en ce que** la butée (4, 35) est déplacée en arrière de la longueur d'amortissement (5) après éloignement de l'itinéraire de transport du produit lors du dépassement du point d'arrêt.

5. Butée d'arrêt de palette (1, 23, 30) pour arrêter un produit en morceaux à un point d'arrêt d'un itinéraire de transport, le long duquel le produit est transporté dans une direction de transport (2, 37) au moyen d'un dispositif de transport continu, avec une butée (4, 35) et un système d'entraînement (11, 38) au moyen duquel la butée (4, 35) peut être enlevée d'une position de réarmement en dehors de l'itinéraire de transport dans l'itinéraire de transport et de l'itinéraire de transport, avec un élément d'étranglement (6), sachant qu'une impulsion du produit agissant sur la butée (4, 35) et déplaçant la butée (4, 35) d'une longueur d'amortissement (5) dans la direction de transport (2, 37) est dissipée lors de la traversée du fluide à travers l'élément d'étranglement (6) et avec un système d'entraînement de réarmement au moyen duquel la butée (4, 35) peut être déplacée en arrière de la longueur d'amortissement (5)dans la position de réarmement à l'opposé de la direction de transport (2, 37), **caractérisée en ce que** la butée (4, 35) peut être pivotée de la direction de transport (2, 37) au moyen du système d'entraînement (11, 38).

6. Butée d'arrêt de palette (1, 23, 30) selon la revendication précédente, **caractérisée en ce que** le système d'entraînement (11, 38) est un moteur.

7. Butée d'arrêt de palette (1, 23, 30) selon l'une quelconque des revendications précédentes 5 ou 6, **caractérisée en ce que** l'élément d'amortissement comporte un piston (15) qui peut être mobile dans un vérin d'amortissement rempli de fluide (14).

8. Butée d'arrêt de palette (1, 23, 30) selon la revendication précédente, **caractérisée en ce que** le piston (15) est relié mécaniquement à la butée (4, 35) de telle manière qu'il est déplacé lors du déplacement de la butée (4, 35) dans la direction de transport (2, 37) à l'opposé de la direction de transport (2, 37).

9. Butée d'arrêt de palette (1, 23, 30) selon l'une quelconque des revendications précédentes 5-8, **caractérisée en ce que** la butée (4, 35) est composée d'acier.

10. Butée d'arrêt de palette (1, 23) selon l'une quelconque des revendications précédentes 5-9, **caractérisée en ce que** le système d'entraînement de réarmement comporte une butée de réarmement (20, 24) qui actionne le produit en cas de dépassement du point d'arrêt.
